# EUROPÄISCHE PATENTSCHRIFT

(11) **EP 3 099 198 B1**
(45) Veröffentlichungstag und Bekanntmachung des Hinweises auf die Patenterteilung: **11.07.2018**
(21) Anmeldenummer: 15700497.9
(22) Anmeldetag: 20.01.2015
(51) Int. Cl.: A47B 88/43, F16B 12/38, F24C 15/16

(54) **VERWENDUNG EINES SCHNELLBEFESTIGUNGSELEMENTS**
USE OF QUICK-FASTENING ELEMENT
UTILISATION D'UN ELÉMENT DE FIXATION RAPIDE

(30) Priorität: 28.01.2014 DE 102014100992
(43) Veröffentlichungstag der Anmeldung: 07.12.2016
(73) Patentinhaber: Accuride International GmbH, 65582 Diez/Lahn (DE)
(72) Erfinder: HEFFEL, Andreas, 56170 Bendorf (DE); PETRI, Friedhelm, 65558 Cramberg (DE); MAINUSCH, Fabian, 56073 Koblenz (DE)
(74) Vertreter: WSL Patentanwälte Partnerschaft mbB
(86) Internationale Anmeldenummer: PCT/EP2015/050938
(87) Internationale Veröffentlichungsnummer: WO 2015/113859

(56) Entgegenhaltungen:
- EP-A1- 2 487 422
- EP-A2- 1 158 185
- WO-A1-2010/089553
- DE-A1-102010 021 283
- DE-U1-202008 000 887

## Beschreibung

Die vorliegende Erfindung betrifft eine Verwendung eines Schnellbefestigungselements zur Befestigung einer oder mehrerer Führungsschienen an zwei benachbarten, im Wesentlichen vertikal übereinander und parallel angeordneten, horizontal verlaufenden und in ihrem Endbereich winklig abgebogenen Stangen eines gitterartigen Seitenteils.

### Stand der Technik

Für den Einschub von Gargutträgern weisen insbesondere höherwertige Backöfen aber auch andere Gargeräte, wie Dampfgarer, Führungsschienen, insbesondere kugelgelagerte Teleskopschienen auf, die über gitterartige Seitenteile an den Seitenwänden befestigt sind. Eine Festlegung der Führungsschienen an den gitterartigen Seitenteilen bzw. den Muffelwänden kann durch Verschweißen oder Verschrauben erfolgen bzw. lösbar durch Einhängen und/oder Einclipsen. Eine lösbare Befestigung von derartigen Führungsschienen an gitterartigen Seitenteilen hat den Vorteil, dass die Schienen für eine Reinigung oder eine Ummontierung in eine andere Ebene des Gargeräts von dem gitterartigen Seitenteil oder der Muffelwand selbst einfach gelöst und wieder daran befestigt werden können.

Die EP 1 158 185 B1 beschreibt ein Schnellbefestigungselement, mit welchem Führungsschienen an gitterähnlichen Seitenteilen in Haushaltsgeräten, wie Geschirrspülern, Backöfen etc. eingebracht werden können, wobei das Schnellbefestigungselement einen oberen Halteabschnitt aufweist, der im Gebrauch eine erste Stange eines Seitenteiles zumindest teilweise umgreift, und einen unteren Halteabschnitt, der im Gebrauch eine im Wesentlichen parallel zur ersten Stange verlaufende zweite Stange des Seitenteils zumindest teilweise umgreift, wobei eine Nase zwischen dem oberen und dem unteren Halteabschnitt vorgesehen ist, die in Gebrauch an der zweiten unteren Stange des Seitenteiles anliegt, wobei der untere Halteabschnitt mit der Nase eine Schnappverbindung für die zweite Stange ausbildet, wenn das Schnellbefestigungselement zu seinem Montieren am Seitenteil um die erste Stange verschwenkt wird, wobei eine zweite Nase zwischen dem unteren und dem oberen Halteabschnitt vorgesehen ist, an der bei Durchbiegen der ersten Stange zu der zweiten Stange hin die erste Stange anliegt. Die zweite Nase ist dafür vorgesehen, dass sie den Abstand zwischen den beiden Stangen auch bei einer erheblichen vertikalen Belastung gleichhält, wodurch ein voneinander Entfernen der Stangen verhindert werden soll und damit ein Lösen des Schnellbefestigungselements. Des Weiteren soll eine Last an dem Schnellbefestigungselement auf beide Stangen gleichmäßig verteilt werden.

Die DE 20 2005 013 789 U1 beschreibt ebenfalls ein Schnellbefestigungselement, wobei dieses an einem oberen und unteren Gitterstab eines Seitengitters angebracht wird, wozu vorzugsweise beide der oberen und unteren Gitterstäbe eines Paars von Gitterstäben ausreichend elastisch ist/sind und sich der Abstand zwischen den oberen und unteren Gitterstäben durch Aufbringen einer Kraft im Bereich zwischen den Endabschnitten der Gitterstäbe verringern lässt und die Elastizität eines oder beider der Gitterstäbe eine Rückstellkraft in Richtung des ursprünglichen Abstandes der Gitterstäbe liefert, wobei an einer Führungsschiene wenigstens ein Schnellbefestigungselement vorgesehen ist/sind, wenn es einen oberen Halteabschnitt aufweist, der einen oberen Gitterstab eines Paars von Gitterstäben von oben teilweise umgreift und einen unteren Halteabschnitt aufweist, der den zugehörigen unteren Gitterstab des Paares von Gitterstäben von unten teilweise umgreift, wobei zwischen den Gitterstäben und dem Schnellbefestigungselement eine form- und kraftschlüssige Verbindung ausgebildet wird und der obere und der untere Halteabschnitt des Schnellbefestigungselementes bezüglich ihres vertikalen Abstandes in einer starren Beziehung zueinander stehen.

Bei beiden oben beschriebenen Formen von Schnellbefestigungselementen ist eine schnelle Anbringung an Gitterstäben eines Seitenteiles möglich. Sie weisen jedoch den Nachteil auf, dass Führungsschienen nicht oder nur schwer so daran anzubringen sind, dass Gargutträger der gleichen Größe auf den Führungsschienen aufgelegt werden können, wie sie für die gitterartigen Seitenteile ohne zusätzliche Führungsschiene verwendet werden. Zudem wird durch die Ausgestaltung der Schnellbefestigungselemente in dem Innenraum eines Gargerätes viel Platz eingenommen, der nicht für Führungsschienen, Gargutträger und Gargut zur Verfügung steht.

Zusätzlich beschreibt die WO 2010 089553 A1 eine Einrichtung zum Befestigen eines Gegenstands, wie zum Beispiel eines Gleitlagers für einen Boden oder eine Schublade, an einem Gitter, das im Wesentlichen vertikale und/oder im Wesentlichen horizontale, langgestreckte Stäbe aufweist, wie sie z.B. für gewöhnlich in einem Ofen, einer Spülmaschine oder einem anderen Haushaltsgerät verwendet werden. Die Einrichtung zum Anbringen umfasst eine erste und eine zweite Befestigungsklammer, die eine stabile Art der Befestigung des Gegenstands an dem Gitter bereitstellt.

### Aufgabe

Der vorliegenden Erfindung liegt daher die Aufgabe zu Grunde, eine einfach und preiswert herzustellende Schnellbefestigung bereitzustellen, mit der der Raum innerhalb eines Gargerätes optimal ausgenutzt wird.

### Beschreibung der Erfindung

Erfindungsgemäß wird diese Aufgabe gelöst durch eine Verwendung eines Schnellbefestigungselements der eingangs genannten Art, wobei das gitterartige Seitenteil übereinander angeordnete horizontale Stangenpaare aufweist, wobei der Abstand in vertikaler Richtung zwischen den horizontalen Stangen eines Stangenpaares geringer ist als der Abstand zwischen horizontalen Stangen benachbarter Stangenpaare und wobei das Schnellbefestigungselement zwischen den horizontalen Stangen benachbarter Stangenpaare angebracht wird, wobei das Schnellbefestigungselement einen ersten Halteabschnitt aufweist, welcher für ein form- und/oder kraftschlüssiges Ineingriffbringen des Schnellbefestigungselementes mit einer ersten Stange der zwei benachbarten Stangen ausgebildet ist, einen zweiten Halteabschnitt aufweist, welcher für ein form- und/oder kraftschlüssiges Ineingriffbringen des Schnellbefestigungselementes mit einer zweiten Stange der zwei benachbarten Stangen ausgebildet ist, und einen zwischen dem ersten Halteabschnitt und dem zweiten Halteabschnitt angeordneten und die Halteabschnitte verbindenden Verbindungsabschnitt aufweist, wobei sich die ersten und zweiten Halteabschnitte von dem Verbindungsabschnitt zu einer Seite abgewinkelt zwischen den Stangen des Stangenpaares befestigbar erstrecken und in befestigtem Zustand an einander zugewandten Seiten der Stangen anliegen, wobei die erste Stange die obere Stange eines Stangenpaares des gitterartigen Seitenteils ist und die zweite Stange die untere Stange des benachbarten Stangenpaares des gitterartigen Seitenteils ist, und wobei der Verbindungsabschnitt einen Befestigungsabschnitt zum Befestigen der Führungsschiene aufweist.

Durch die Kombination zweier Halteabschnitte, die durch einen Verbindungsabschnitt miteinander verbunden sind, und die in befestigtem Zustand an einander zugewandten Seiten von Stangen eines Seitengitters anliegen, erstreckt sich das Schnellbefestigungselement in vertikaler Richtung im Wesentlichen zwischen zwei horizontalen Stangen. Durch diese Ausgestaltung, bei der ein form- und/oder kraftschlüssiges Einklemmen des Schnellbefestigungselementes zwischen den zwei Stangenpaaren erfolgt, wird eine erheblich größere Abweichung des Abstands der Stangen toleriert, als dies bei bekannten Schnellbefestigungselementen der Fall ist. Überdies wird durch die spezielle Ausgestaltung des Schnellbefestigungselementes ein Befestigungsabschnitt zwischen den Halteabschnitten bereitgestellt, an welchem eine Führungsschiene befestigbar ist. Durch eine derartige Anbringung einer Führungsschiene wird der Abstand zwischen zwei vertikal übereinander und parallel angeordneten, horizontal verlaufenden Stangen optimal zur Bereitstellung einer Auflage für einen Gargutträger ausgenutzt. Zudem kann die Position des Befestigungsabschnitts an dem Verbindungsabschnitt ohne Einschränkungen durch das Schnellbefestigungselement, soweit es der Abstand zwischen der ersten und zweiten horizontalen Stangen zulässt frei bestimmt werden, wodurch einerseits eine optimale Platzausnutzung und andererseits eine große Variabilität bereitgestellt wird.

Durch die spezielle Ausgestaltung des Schnellbefestigungselementes zur Befestigung einer Führungsschiene ist es auch möglich, oberhalb und unterhalb der zu befestigenden Führungsschiene und je nach Ausgestaltung des Schnellbefestigungselementes ggf. auch zwischen Führungsschiene und Schnellbefestigungselement zusätzlich ausreichend Raum für das Anbringen weiterer Elemente an der Führungsschiene und/oder dem Schnellbefestigungselement bereit zu stellen. Dazu gehören Elemente bzw. Vorrichtungen für einen Selbsteinzug der Führungsschiene, Synchronisierung der Führungsschiene, Bremselemente, Aus- bzw. Einhalterungen, etc.

Der Befestigungsabschnitt ist in bestimmten Ausführungsformen ein Bestandteil des Verbindungsabschnitts, der nicht abgegrenzt ist. In bestimmten Ausführungsformen ist der Befestigungsabschnitt eine aus dem Material des Verbindungsabschnitts herausgestanzte Lasche, die zum optionalen Herausbiegen oder Herausprägen ausgebildet ist. Je nach Platzbedarf und Form sowie Breite eines Gargutträgers, der über eine Führungsschiene mit dem Schnellbefestigungselement an dem gitterartigen Seitenteil befestigt werden soll, kann so die Position des Befestigungsabschnitts relativ zu dem Verbindungsabschnitt, aus dem er herausgestanzt ist, variiert werden, und ggf. der Befestigungsabschnitt auch ein durch das Herausstanzen abgegrenzter Teil des Verbindungsabschnitts sein, der nicht von dem Verbindungsabschnitt hervorsteht. Letzteres ist insbesondere für das Anbringen von Führungsschienen in Form eines Teleskop-Vollauszugs vorteilhaft. Derartige Vollauszüge weisen neben den auch bei Teleskop-Teilauszügen vorhandenen Innen- und Außenschienen zusätzlich noch eine Mittelschiene auf und sind dadurch breiter und höher.

Der Begriff "zu einer Seite abgewinkelt" beschreibt in Bezug auf die Position der Halteabschnitte zu dem Verbindungsabschnitt, dass beide im Verhältnis zu dem Verbindungsabschnitt zu derselben Seite abgewinkelt angeordnet sind. In einer Ausführungsform, bei der der Verbindungsabschnitt flächig ausgestaltet ist, liegt dabei ein Knick oder eine Rundung zwischen dem Verbindungsabschnitt und jedem der Halteabschnitte vor. Es ist dazu jedoch nicht zwingend erforderlich, dass Verbindungsabschnitt sowie erster und zweiter Halteabschnitt einstückig aus einem Material ausgeformt sind.

In einer Ausführungsform ist der erste und/oder zweite Halteabschnitt so ausgebildet, dass er/sie mit der ersten und/oder zweiten Stange formschlüssig in Eingriff tritt/treten.

In einer Ausführungsform weisen die Stangen einen kreisförmigen Querschnitt auf. In einer Ausführungsform befindet sich zwischen den Endbereichen der Stangen ein mittlerer Bereich, der die größte Ausdehnung der horizontal verlaufenden Stangen aufweist. In bestimmten Ausführungsformen sind beide Endbereiche der Stangen winklig abgebogen.

In einer Ausführungsform ist das Schnellbefestigungselement für eine unter Aufbringung einer Kraft federnd vorgespannte Verringerung des Abstands zwischen dem ersten und dem zweiten Halteabschnitt elastisch ausgebildet. Durch eine derartige elastische Ausgestaltung des Schnellbefestigungselementes insgesamt und insbesondere des Verbindungsabschnitts, der zwischen erstem und zweitem Halteabschnitt angeordnet ist, wird ein Schnellbefestigungselement bereitgestellt, das auftretende Schwankungen bezüglich der Abstände von Stangen gitterartiger Seitenteile in einem Gargerät toleriert, wobei dennoch eine sichere Befestigung einer Führungsschiene an zwei benachbarten Stangen möglich ist. Diese Elastizität stellt unabhängig von der Ausgestaltung der Halteelemente einen Kraftschluss zwischen Schnellbefestigungselement und den zwei benachbarten, im Wesentlichen vertikal übereinander und parallel angeordneten, horizontal verlaufenden und in ihrem Endbereich winklig abgebogenen Stangen bereit.

In einer Ausführungsform ist der Verbindungsabschnitt im Wesentlichen plattenförmig ausgebildet, wobei der Befestigungsabschnitt zum Befestigen der Führungsschiene als ein gekröpft aus der Ebene der Platte hervorstehender, laschenförmiger Abschnitt geformt ist. Vorzugsweise erstreckt sich ein Bereich des Befestigungsabschnitts im Wesentlichen parallel zu einer Ebene, in der der plattenförmig ausgebildete Verbindungsabschnitt liegt, wobei dieser Bereich für das Anbringen der Führungsschiene vorgesehen ist. Bei einer derartigen Ausgestaltung ist es möglich, durch Anpassen der Kröpfung, durch die der Befestigungsabschnitt versetzt zu dem Verbindungsabschnitt angeordnet ist, die Position einer mit dem Schnellbefestigungselement befestigten Führungsschiene in Bezug auf die Stangen an die jeweilige Ausgestaltung des Seitengitters und den vorhandenen Platz in dem Gerät anzupassen. Durch die Kröpfung kann eine weitere Anpassung an die Art der zu verwendenden Führungsschiene aber auch an die Ausgestaltung eines dafür vorgesehenen Gargutträgers erfolgen. Beispielsweise sind Teleskop-Teilauszüge schmaler als Teleskop-Vollauszüge, so dass bei Verwendung von Teilauszügen in der Regel die oben beschriebene Kröpfung des Abschnitts erforderlich ist, wohingegen bei Anbringen eines Vollauszugs kein oder ein weniger stark ausgeprägtes Hervorstehen des Befestigungsabschnitts von dem Verbindungsabschnitt vorteilhaft ist.

In einer Ausführungsform ist der erste und/oder zweite Halteabschnitt wenigstens in Bereichen, die für das Ineingriffbringen mit den Stangen vorgesehen sind, der Kontur der jeweiligen Stange, an der dieser Halteabschnitt anliegt, angepasst. Dadurch lässt sich besonders einfach ein formschlüssiges Ineingrifftreten mit der jeweiligen Stange erzeugen. In einer Ausführungsform sind der erste und/oder zweite Halteabschnitt bei einer Stange mit im Wesentlichen kreisförmigem Querschnitt entlang eines Kreisbogens oder mehrerer Kreisbögen an die Kontur der Stange angepasst, wobei vorzugsweise der Kreisbogen einen Mittelpunktswinkel aufweist, der im Bereich von ungefähr 10° bis ungefähr 170° liegt, vorzugsweise ungefähr 30° bis ungefähr 140°.

In einer Ausführungsform weist das Schnellbefestigungselement an dem ersten und/oder zweiten Halteabschnitt wenigstens eine Rastnase auf, die mit der jeweiligen ersten und/oder zweiten Stange in Eingriff bringbar ist. Vorzugsweise ragt die wenigstens eine Rastnase aus dem Material des jeweiligen Halteabschnitts hervor und ist aus diesem ausgeprägt. Eine solche Rastnase ermöglicht ein gutes formschlüssiges Ineingrifftreten des Halteabschnitts mit einer Stange.

In einer Ausführungsform weist der erste und/oder der zweite Halteabschnitt eine Betätigungslasche auf, die sich an den Halteabschnitt an seiner von dem Verbindungsabschnitt abgewandten Seite anschließt, wobei vorzugsweise die Betätigungslasche eine Verlängerung des Halteabschnitts ist. Mit Hilfe einer derartigen Betätigungslasche wird das Anbringen einer Führungsschiene mit dem Schnellbefestigungselement an einem gitterartigen Seitenteil erleichtert, da sie das Einführen und eine notwendige Kraftausübung zum elastischen Verformen des Schnellbefestigungselementes erleichtert. Zudem wird dadurch insbesondere auch die Demontage des Schnellbefestigungselements von dem gitterartigen Seitenteil erleichtert, indem durch Druck auf die bzw. Zug an der Betätigungslasche der Abstand zwischen erstem und zweitem Halteabschnitt derart verkleinert wird, dass zumindest der Halteabschnitt, an dem sich die Betätigungslasche befindet, außer Eingriff mit der jeweiligen Stange bringbar ist. Die Betätigungslasche stellt eine Bedienfläche bereit, die gut mit mehreren Fingern zu greifen bzw. mit einem Finger zu betätigen ist.

In einer Ausführungsform ist der Verbindungsabschnitt wenigstens abschnittsweise im Wesentlichen plattenförmig ausgebildet, wobei an einer oder an beiden einander gegenüberliegenden Seitenkanten des Verbindungsabschnitts Laschen ausgebildet sind, die sich im Wesentlichen in oder parallel zur Ebene des plattenförmigen Verbindungsabschnitts oder abgewinkelt zu dieser Ebene verlaufend erstrecken. Der Begriff "Seitenkanten" bezeichnet dabei die Kanten des Verbindungsabschnitts, an die sich kein Halteabschnitt anschließt. Eine derartige Lasche liegt bei an zwei horizontalen Stangen eines gitterartigen Seitenteils angebrachtem Schnellbefestigungselement an einem vertikal verlaufenden Stab an, mit dem wenigstens ein Endbereich der winklig abgebogenen horizontal verlaufenden Stangen verbunden ist. Dadurch erfolgt eine Stabilisierung des Schnellbefestigungselementes, durch die insbesondere bei Belastung ein Durchbiegen des Verbindungsabschnitts und dadurch bedingtes Lösen von dem gitterartigen Seitenteil verhindert wird. In einer Ausführungsform liegt dazu der im Wesentlichen plattenförmige Verbindungsabschnitt an einer gedachten Ebene, die parallel zu der Ebene verläuft, in der die mittleren Bereiche der horizontal verlaufenden Stangen angeordnet sind, und in der der vertikale Stab liegt, an, sodass sich die Lasche(n) in der Ebene dieses Verbindungsabschnitts erstreckt/erstrecken. In bestimmten Ausführungsformen, wenn der Verbindungsabschnitt nicht innerhalb dieser Ebene verläuft, sind Kröpfungen in der Lasche/den Laschen vorgesehen, sodass diese in befestigtem Zustand des Schnellbefestigungselementes mit einem vertikalen Stab in anliegenden Eingriff bringbar ist/sind.

In Ausführungsformen, in denen sich diese Lasche(n) abgewinkelt zur Ebene des Plattenförmigen Verbindungsabschnitts verlaufend erstreckt/erstrecken, wird ein Anschlag an dem oben beschriebenen vertikalen Stab bereitgestellt, wodurch ein seitliches Verrutschen des Schnellbefestigungselementes entlang eines zwischen den Endbereichen befindlichen mittleren Bereichs der horizontalen Stange/Stangen verhindert wird.

In einer Ausführungsform sind zwei derartige Laschen vorgesehen, die in entgegengesetzte Richtung von dem Verbindungsabschnitt weisen. Bei Schnellbefestigungselementen, die zwei Laschen aufweisen, die an gegenüberliegenden Seitenkanten des Verbindungsabschnitts angeordnet sind, liegt in einem an einem gitterartigen Seitenteil angebrachten Zustand eine Lasche an einem vertikalen Stab an, während die andere Lasche in bestimmten Ausführungsformen bei derartigem Anbringen an einer Führungsschiene keine Funktion hat. Es wird jedoch dadurch ermöglicht, Schnellbefestigungselemente bereitzustellen, die im Bereich beider Enden einer länglichen Führungsschiene angebracht und zu deren Befestigung an einem gitterartigen Seitenteil verwendet werden können, wobei sie jeweils die gleichen Funktionen oder, bei unterschiedlicher Ausgestaltung der beiden Laschen, sich ergänzende Funktionen bereitstellen.

In einer Ausführungsform weist wenigstens einer der Halteabschnitte (2,3) an einer oder beiden einander gegenüberliegenden Seiten wenigstens eine abgewinkelt ausgebildete Anschlagslasche auf. Vorzugsweise schließt sich die Anschlagslasche an einen Bereich des Halteabschnitts an, der näher an dem Verbindungsabschnitt liegt als der Bereich der für das Ineingrifftreten mit einer Stange vorgesehen ist. Durch eine derartige Anschlagslasche wird das Positionieren der Führungsschiene entlang der horizontalen Stangen des gitterartigen Seitenteils ermöglicht und gleichzeitig wird im Gebrauch ein Verrutschen des Schnellbefestigungselements und der Führungsschiene entlang eines mittleren Bereichs der Stangen verhindert. In einer Ausführungsform tritt eine solche Anschlagslasche dazu lediglich an der dem Schnellbefestigungselement zugewandten Seite mit dem abgewinkelten Endbereich der horizontalen Stange in Eingriff.

In einer Ausführungsform ist das Schnellbefestigungselement spiegelsymmetrisch zu einer entlang einer Verbindungsrichtung zwischen erstem und zweitem Halteelement durch den Verlängerungsabschnitt verlaufenden Symmetrieebene geformt. Derartige Schnellbefestigungselemente können im Bereich beider Enden einer länglichen Führungsschiene angebracht werden und stellen dann in Bezug auf die Anbringung an einem gitterartigen Seitenteil an beiden Enden die gleiche Funktionalität bereit. Es ist dafür nicht erforderlich, unterschiedliche Schnellbefestigungselemente zu fertigen.

In einer Ausführungsform weist das Schnellbefestigungselement an dem Verbindungsabschnitt einen, zwei, drei oder vier Befestigungsabschnitte zum Anbringen einer entsprechenden Anzahl von Führungsschienen auf. Die Befestigungsabschnitte sind vorzugsweise übereinander angeordnet. Durch eine derartige Ausgestaltung wird insbesondere bei gitterartigen Seitenteilen, die große Abstände zwischen benachbarten Stangen aufweisen, ermöglicht, unterschiedliche Positionen für das Befestigen einer Führungsschiene bereitzustellen bzw. mehrere Führungsschienen an einem gitterartigen Seitenteil mit Hilfe eines Schnellbefestigungselements zu befestigen.

In einer Ausführungsform sind die Halteabschnitte und der Verbindungsabschnitt und gegebenenfalls Übergangsabschnitte einstückig ausgebildet, wobei diese vorzugsweise aus Stahl- oder Edelstahlblech geformt sind. Vorzugsweise ist das gesamte Schnellbefestigungselement einstückig ausgebildet, vorzugsweise aus Stahl- oder Edelstahlblech.

In einer Ausführungsform weist eine Führungsschiene wenigstens ein oben beschriebenes Schnellbefestigungselement auf. Die Führungsschiene ist bei bestimmten Ausführungsformen ein Teleskop-Vollauszug, d.h. sie weist in vollständig ausgezogenem Zustand eine Länge auf, die mehr als der doppelten Länge in vollständig zusammengeschobenem Zustand entspricht. Gemäß anderer Ausführungsformen ist die Führungsschiene ein Teleskop-Teilauszug, bei welchem die Länge in vollständig ausgezogenem Zustand etwas geringer ist, als die doppelte Länge in vollständig zusammengeschobenem Zustand. Ein Teleskop-Vollauszug weist zusätzlich zu den auch beim Teilauszug vorhandenen Innen- und Außenschienen noch wenigstens eine Mittelschiene auf.

In einer Ausführungsform weist die Führungsschiene zwei Schnellbefestigungselemente auf, wobei jeweils ein Schnellbefestigungselement im Bereich eines Endes der länglich ausgestalteten Führungsschiene angeordnet ist, während das weitere Schnellbefestigungselement im Bereich des weiteren Endes der länglichen Führungsschiene angeordnet ist. Der Begriff "im Bereich eines Endes angeordnet" bezeichnet dabei, dass die Verbindung zwischen Schnellbefestigungselement und Führungsschiene in einem Bereich liegt, der von dem jeweiligen Ende der Führungsschiene zwischen 1 % und 30 % bezogen auf die Gesamtlänge der Führungsschiene beabstandet ist, vorzugsweise zwischen 2 % und 10 %. In bestimmten Ausführungsformen ist ein Schnellbefestigungselement im Bereich eines Endes der länglich ausgestalteten Führungsschiene angeordnet, während das weitere Element beabstandet zu dem ersten Element aber nicht notwendigerweise im Bereich des anderen Endes angeordnet ist.

Durch die spezielle Ausgestaltung der Führungsschiene mit wenigstens einem oben beschriebenen Schnellbefestigungselement ist es möglich, oberhalb und unterhalb der Führungsschiene und in bestimmten Ausführungsformen auch zwischen Führungsschiene und Schnellbefestigungselement zusätzlich ausreichend Raum für das Anbringen weiterer Elemente an der Führungsschiene und/oder dem Schnellbefestigungselement bereit zu stellen. Dazu gehören Elemente bzw. Vorrichtungen für einen Selbsteinzug der Führungsschiene, Synchronisierung der Führungsschiene, Bremselemente, Aus- bzw. Einhalterungen, etc.

Die der Erfindung zu Grunde liegende Aufgabe wird durch die Verwendung eines oben beschriebenen Schnellbefestigungselementes zur Befestigung einer Führungsschiene an einem gitterartigen Seitenteil eines Gerätes gelöst, vorzugsweise an einem Seitengitter eines Backofens.

Der Begriff "gitterartiges Seitenteil", wie er hier verwendet wird, bezieht sich hierin auf üblicherweise in Backöfen oder anderen Gargeräten angeordnete Seitengitter, die zwei oder mehrere vertikale Stäbe aufweisen, die durch horizontale Stangen verbunden sind. Dieser Begriff umfasst jedoch auch gitterartige Seitenteile, bei denen horizontal verlaufende Stangen ohne Bereitstellung eines vollständigen Seitengitters unmittelbar mit der seitlichen Innenwand bzw. Muffelwand eines Gargerätes verbunden sind. In bestimmten Ausführungsformen umfasst das gitterartige Seitenteil vertikal verlaufende Stäbe, mit denen die horizontal verlaufenden Stangen im Bereich ihrer Enden verbunden sind.

In einer Ausführungsform weist das gitterartige Seitenteil übereinander angeordnete horizontale Stangenpaare auf, wobei der Abstand in vertikaler Richtung zwischen den horizontalen Stangen eines Stangenpaares geringer ist als der Abstand zwischen horizontalen Stangen benachbarter Stangenpaare, wobei das Schnellbefestigungselement zwischen den horizontalen Stangen benachbarter Stangenpaare eingebracht wird. Dadurch wird der größere Abstand zwischen horizontalen Stangen benachbarter Stangenpaare optimal für das Anbringen einer oder mehrerer Führungsschienen an dem gitterartigen Seitenteil ausgenutzt. Insbesondere ist es damit möglich, zwischen Stangen benachbarter Stangenpaare eine, zwei, drei oder vier Führungsschienen anzubringen.

### Figuren

Weitere Vorteile, Merkmale und Ausführungsformen der vorliegenden Erfindung werden nachfolgend anhand mehrerer Ausführungsbeispiele in Bezug auf die angefügten Figuren erläutert, wobei diese lediglich beispielhaft sind und nicht den Schutzumfang beschränken.

Es zeigen:
- Figur 1a: ein Schnellbefestigungselement in einer perspektivischen Darstellung von schräg vorne, bezogen auf einen Betrachter, der in einen Innenraum eines Gargeräts blickt,
- Figur 1b: das Schnellbefestigungselement aus Figur 1a in an einem gitterartigen Seitenteil angebrachten Zustand,
- Figur 1c: ein Querschnitt des Schnellbefestigungselements aus den Figuren 1a und 1b in an einem gitterartigen Seitenteil angebrachten Zustand,
- Figur 2a: eine weitere Ausführungsform eines Schnellbefestigungselements in einer perspektivischen Darstellung von schräg vorne, bezogen auf einen Betrachter, der in einen Innenraum eines Gargeräts blickt,
- Figur 2b: das Schnellbefestigungselement aus Figur 2a in an einem gitterartigen Seitenteil angebrachten Zustand,
- Figur 2c: ein Querschnitt des Schnellbefestigungselements aus den Figuren 2a und 2b in an einem gitterartigen Seitenteil angebrachten Zustand,
- Figur 3a: eine weitere Ausführungsform eines Schnellbefestigungselements in einer perspektivischen Darstellung von schräg vorne, bezogen auf einen Betrachter, der in einen Innenraum eines Gargeräts blickt,
- Figur 3b: das Schnellbefestigungselement aus Figur 3a in an einem gitterartigen Seitenteil angebrachten Zustand,
- Figur 3c: ein Querschnitt des Schnellbefestigungselements aus den Figuren 3a und 3b in an einem gitterartigen Seitenteil angebrachten Zustand,
- Figure 3d: eine Draufsicht auf das Schnellbefestigungselement in an einem gitterartigen Seitenteil angebrachten Zustand,
- Figur 4a: eine weitere Ausführungsform eines Schnellbefestigungselements in einer perspektivischen Darstellung von schräg vorne, bezogen auf einen Betrachter, der in einen Innenraum eines Gargeräts blickt,
- Figur 4b: das Schnellbefestigungselement aus Figur 4a in an einem gitterartigen Seitenteil angebrachten Zustand,
- Figur 4c: ein Querschnitt des Schnellbefestigungselements aus den Figuren 4a und 4b in an einem gitterartigen Seitenteil angebrachten Zustand,
- Figur 5: eine weitere Ausführungsform eines Schnellbefestigungselements in einer Querschnittsansicht,
- Figur 6: eine weitere Ausführungsform eines Schnellbefestigungselements in einer perspektivischen Darstellung von schräg vorne, bezogen auf einen Betrachter, der in einen Innenraum eines Gargeräts blickt in an einem gitterartigen Seitenteil angebrachten Zustand und
- Figur 7: eine seitliche Draufsicht auf ein Schnellbefestigungselement mit Führungsschienen in an einem Seitengitter angebrachten Zustand.

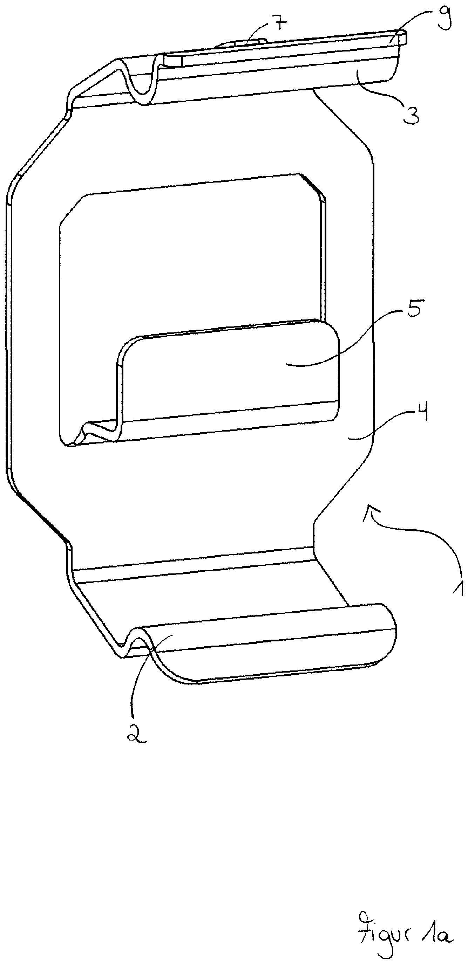

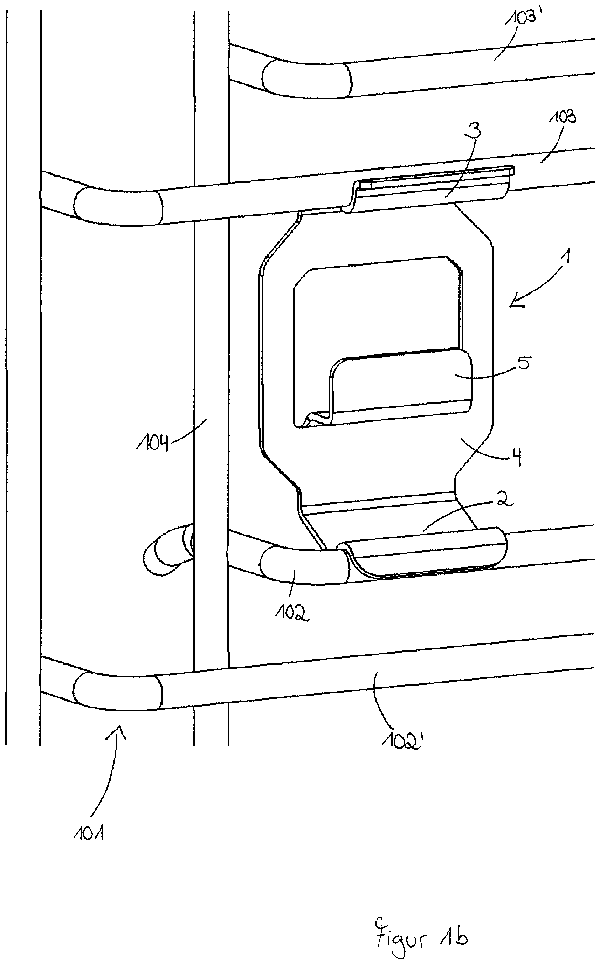

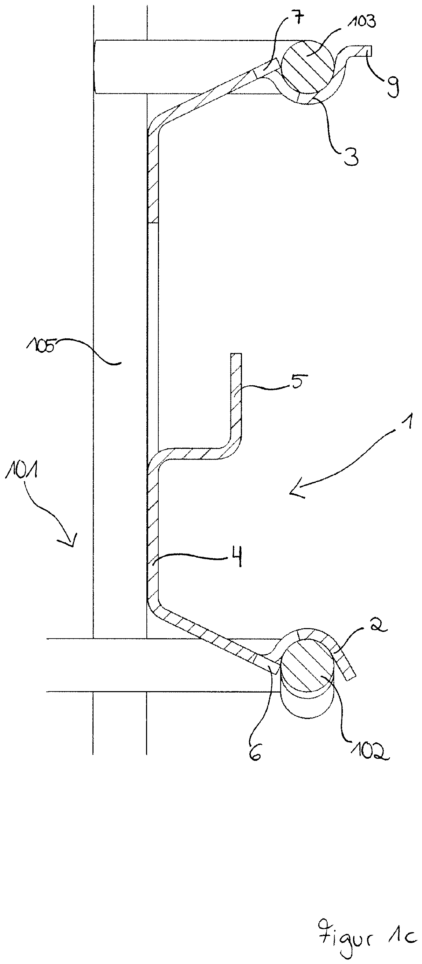

In den Figuren 1 bis 7 sind einander entsprechende Elemente mit gleichen Bezugszahlen versehen, auch wenn sie in den verschiedenen Ausführungsformen nicht zwingend identisch ausgestaltet sind.

Das in den Figuren 1a, 1b und 1c gezeigte Schnellbefestigungselement 1 weist einen ersten Halteabschnitt 2 und einen zweiten Halteabschnitt 3 auf, die durch einen zwischen dem ersten Halteabschnitt und dem zweiten Halteabschnitt angeordneten Verbindungsabschnitt 4 verbunden sind. An dem Verbindungsabschnitt 4 befindet sich ein Befestigungsabschnitt 5, der von dem im Wesentlichen plattenförmig ausgebildeten Verbindungsabschnitt 4 gekröpft hervorsteht und laschenförmig ausgebildet ist. Der Befestigungsabschnitt verläuft im Wesentlichen parallel zu einer Ebene, in der der Verbindungsabschnitt liegt. Weiter ist bei dieser Darstellung an dem Halteabschnitt 3 eine Rastnase 7 erkennbar.

In Figur 1b ist zu erkennen, dass das Schnellbefestigungselement 1 zwischen den horizontalen Stangen 102 und 103 befestigt ist, wobei die Stange 102 die obere Stange eines Paares von Stangen 102 und 102' eines gitterartigen Seitenteils 101 und die Stange 103 die untere Stange eines Paares von Stangen 103 und 103' des gitterartigen Seitenteils ist.

In dem in Figur 1c gezeigten Querschnitt durch das Schnellbefestigungselement 1 aus Figur 1a, ist eine Darstellung eines Schnitts gewählt, der im Wesentlichen durch die Spiegelebene des spiegelsymmetrischen Schnellbefestigungselements 1 und damit auch senkrecht zu einer Längserstreckung der mittleren Bereiche der horizontalen Stangen verläuft. In dieser Darstellung ist deutlich erkennbar, dass der erste Halteabschnitt 2 und der zweite Halteabschnitt 3 mit den benachbart zueinander liegenden horizontalen Stangen 102 und 103 jeweils formschlüssig in Eingriff treten, wobei durch die Rastnasen 6 und 7 ein Beitrag zum formschlüssigen Eingriff bereitgestellt wird. Zudem weist der zweite Halteabschnitt 3 eine Betätigungslasche 9 auf, die durch eine Verlängerung des zweiten Halteabschnitts gebildet wird. Mit Hilfe dieser Betätigungslasche ist es insbesondere möglich, das an einem gitterartigen Seitenteil 101 befestigte Schnellbefestigungselement 1 leicht davon zu entfernen, wobei zunächst der Halteabschnitt 3 durch Hinunterdrücken der Betätigungslasche 9 außer Eingriff mit der Stange 103 gebracht wird, und danach oder annähernd gleichzeitig ein Verschwenken um die durch die Stange 102 gebildete Achse erfolgt und das Schnellbefestigungselement alleine oder mit einer daran angebrachten Führungsschiene von dem gitterartigen Seitenteil abgenommen werden kann. Das Anbringen des Schnellbefestigungselements 1 an dem gitterartigen Seitenteil 101 kann bei dieser Ausführungsform durch einfaches Hineindrücken des Schnellbefestigungselements zwischen die beiden Stangen 102 und 103 erfolgen, unter Ausnutzung der Elastizität des Verbindungsabschnitts 4.

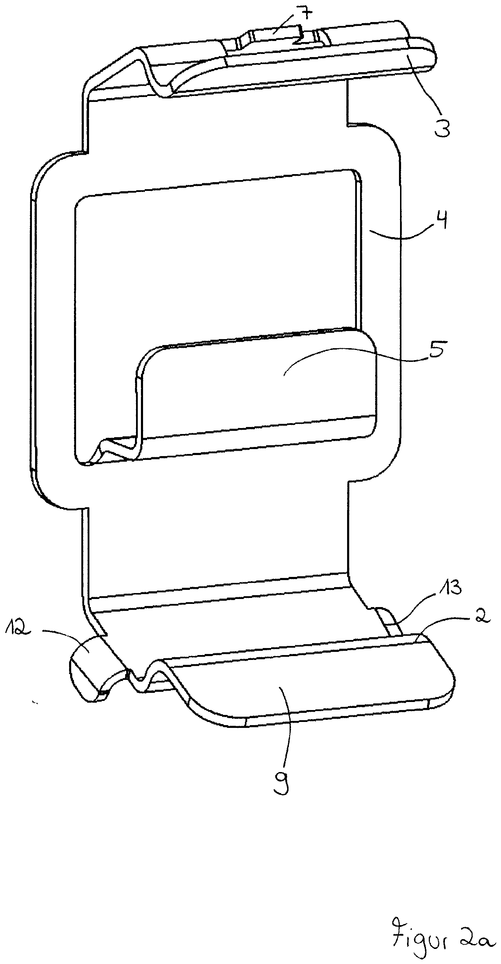

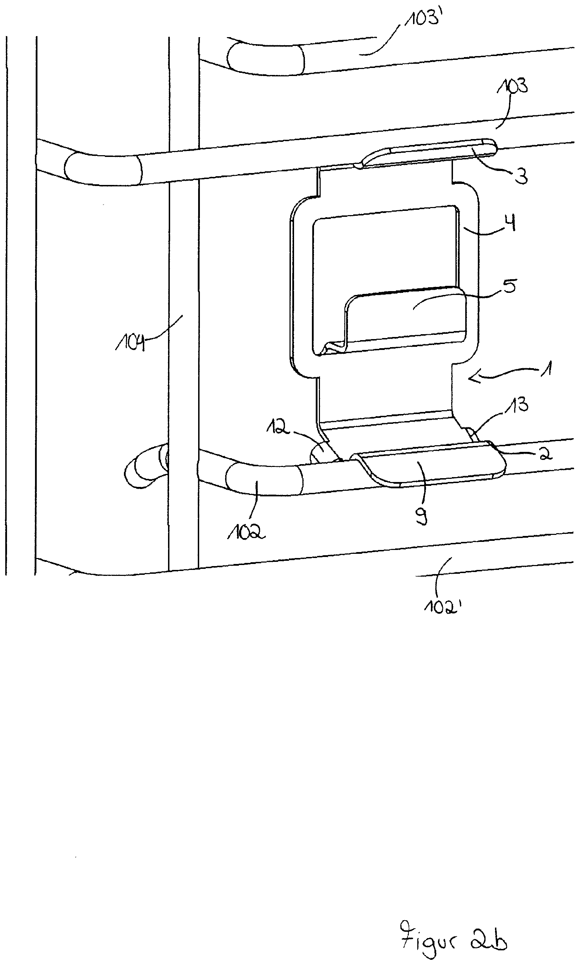

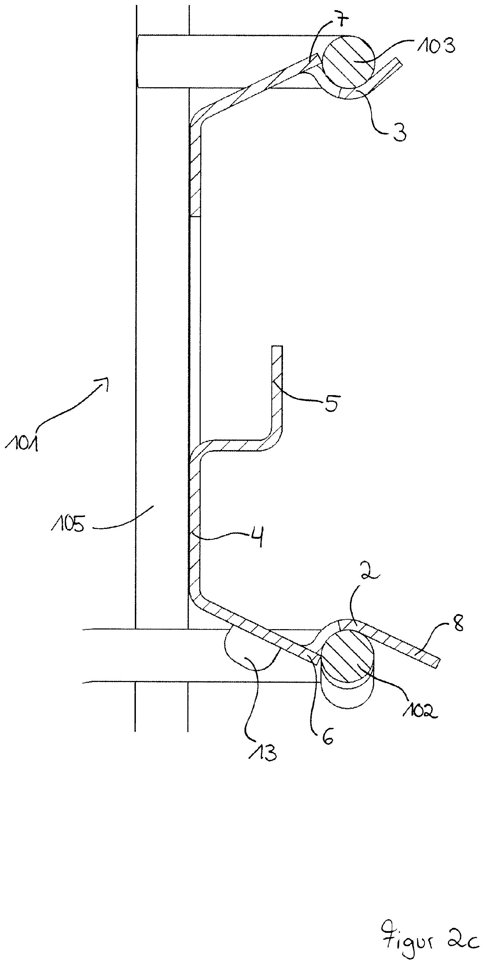

Die Figuren 2a, 2b und 2c zeigen eine weitere Ausführungsform eines Schnellbefestigungselementes 1. Die in den Figur 2a, 2b und 2c gewählten Perspektiven bzw. Ansichten stimmen im Wesentlichen mit denen in den Figuren 1a, 1b und 1c überein. Das Schnellbefestigungselement 1 weist wie bei der Ausführungsform in Figur 1 einen ersten Halteabschnitt 2 und einen zweiten Halteabschnitt 3 auf, zwischen denen ein Verbindungsabschnitt 4 angeordnet ist, an dem sich ein Befestigungsabschnitt 5 befindet. Auch eine Rastnase 7 ist an dem Halteabschnitt 3 vorhanden. Zusätzlich weist diese Ausführungsform an gegenüberliegenden Seiten des ersten Halteabschnitts 2 Anschlagslaschen 12 und 13 auf, die bei Anbringen des Schnellbefestigungselements an einem gitterartigen Seitenteil 101 mit horizontalen Stangen 102 und 103, die abgewinkelte Endbereiche aufweisen, an den abgewinkelten Endbereichen der Stange anliegen können, wobei die Anlage in der in Figur 2b gezeigten Position durch die Lasche 12 an einer Seite des abgewinkelten Endbereichs der Stange 102 erfolgen kann, die zu dem Schnellbefestigungselement weist. Bei einer derartigen Ausgestaltung umgreifen die Laschen 12 und 13 in an einem gitterartigen Seitenteil angebrachten Zustand nicht den abgewinkelten Endbereich einer horizontalen Stange.

In Figur 2b ist zu erkennen, dass das Schnellbefestigungselement 1 zwischen den horizontalen Stangen 102 und 103 befestigt ist, wobei die Stange 102 die obere Stange eines Paares von Stangen 102 und 102' eines gitterartigen Seitenteils 101 und die Stange 103 die untere Stange eines Paares von Stangen 103 und 103' des gitterartigen Seitenteils ist.

Figur 2c zeigt einen Querschnitt des Schnellbefestigungselements, wobei für die Schnittansicht die gleiche Schnittebene wie in Figur 1c gewählt wurde. Bei dieser Ansicht ist deutlich erkennbar, dass sowohl der erste Halteabschnitt 2 als auch der zweite Halteabschnitt 3 Rastnasen 6 und 7 aufweisen, die neben der Form der Halteabschnitte 2 und 3 zu einem formschlüssigen Ineingrifftreten mit den Stangen 102 und 103 beitragen. Zusätzlich weist diese Ausführungsform eine Betätigungslasche 8 auf, die eine Verlängerung des Halteabschnitts 2 an seiner von dem Verbindungsabschnitt abgewandten Seite ist. Analog der obigen zu Figur 1c erfolgten Beschreibung kann mit Hilfe dieser Betätigungslasche das Schnellbefestigungselement leicht von dem Seitengitter entfernt werden. Beim Entfernen kann zunächst der Halteabschnitt 2 durch Anheben der Betätigungslasche 8 außer Eingriff mit der Stange 102 gebracht werden, wodurch in der Regel gleichzeitig ein Verschwenken um die durch die Stange 103 gebildete Achse erfolgt. Zusätzlich müssen bei dieser Ausführungsform für das Entfernen des Schnellbefestigungselements 1 von dem Seitengitter 101 die Anschlagslaschen 12 und 13 durch Betätigen der Betätigungslasche 8 so weit angehoben werden, dass sie über die Stange 102 geschoben werden können. Umgekehrt müssen diese Anschlagslaschen 12 und 13 auch beim Anbringen des Schnellbefestigungselementes zuerst über die Stange 102 geschoben werden. Die erste Lasche 2 tritt dann in Formschluss mit der unteren Stange 102. Anschließend wird durch einfaches Hineindrücken die zweite Lasche 3 mit der oberen Stange 103 in Eingriff gebracht. Der Verbindungsabschnitt 4 ist dafür elastisch ausgebildet.

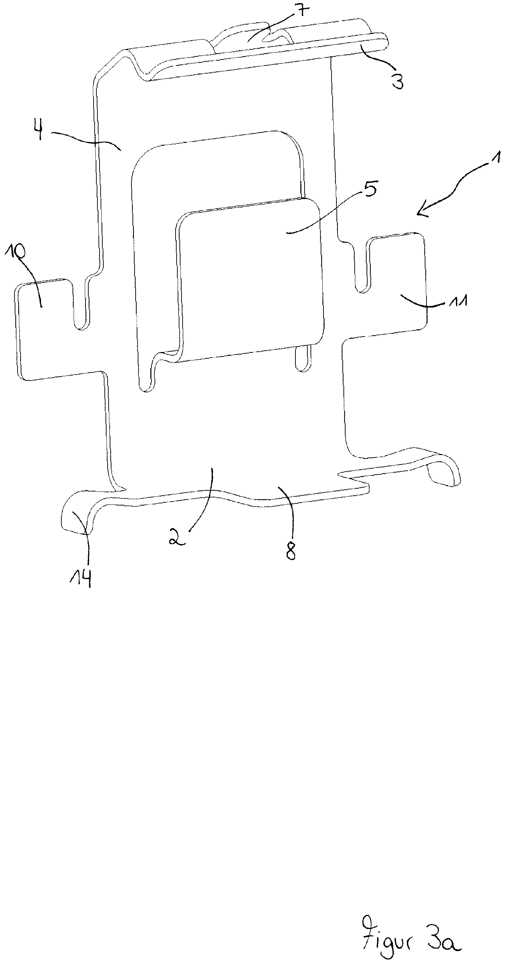

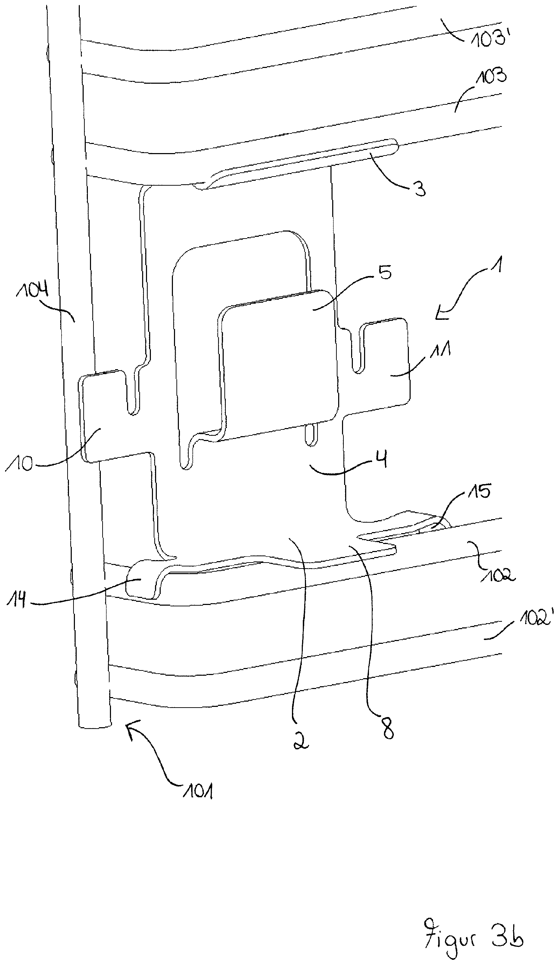

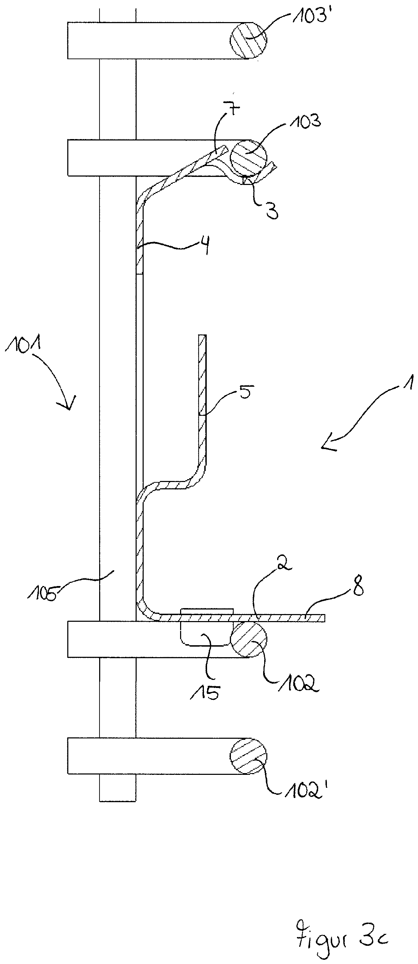

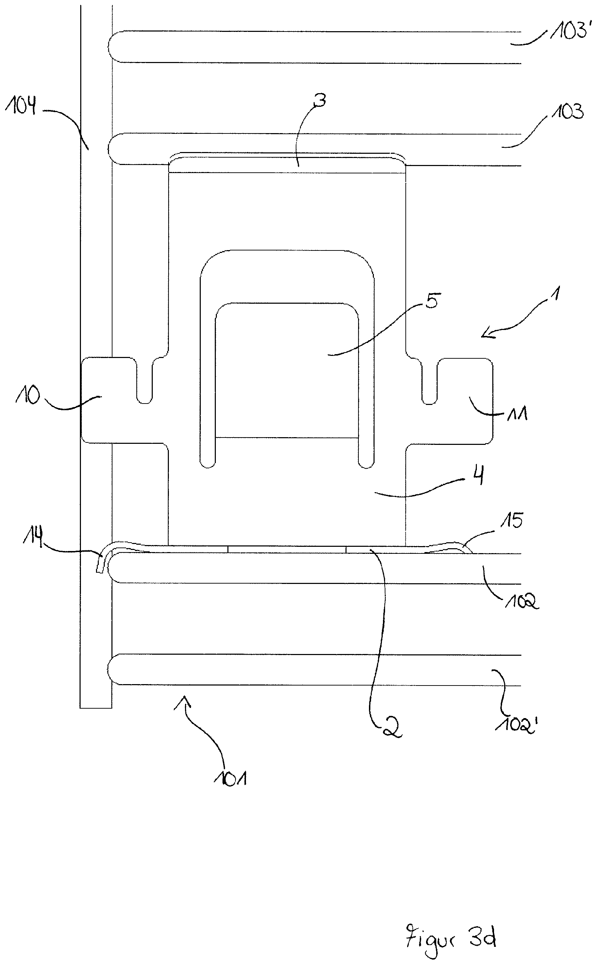

Die Figuren 3a, 3b, 3c und 3d zeigen eine weitere Ausführungsform eines Schnellbefestigungselements 1. Das Schnellbefestigungselement 1 weist einen ersten Halteabschnitt 2 auf, der im Wesentlichen plattenförmig ausgebildet ist und auf der Stange 102 aufliegt. An diesen Halteabschnitt schließt sich eine Betätigungslasche 8 an, die trotz anderer Ausgestaltung im Wesentlichen die gleiche Funktion wie die entsprechende Betätigungslasche in den Figuren 2a, 2b und 2c erfüllt. Weiter weist der erste Halteabschnitt 2 an gegenüberliegenden Seiten Anschlagslaschen 14 und 15 auf. Diese Laschen sind zum Anliegen an einem abgewinkelten Endbereich des ersten horizontalen Stabes 102 ausgestaltet, wobei die Anschlagslasche 14 des ersten Halteabschnitts 2 in der in Figur 3b gezeigten an einem Seitengitter angebrachten Position mit einem abgewinkelten Endbereich der ersten horizontalen Stange 102 in Eingriff tritt, wobei ein Anliegen der Anschlagslasche an einer von dem Schnellbefestigungselement abgewandten Seite der horizontalen Stange erfolgt, wenn das Schnellbefestigungselement entlang eines mittleren Bereichs der Stange 102 von diesem Endbereich weg verschoben wird. Durch eine entsprechende Biegung ist die Anschlagslasche 14 so ausgestaltet, dass sie im Übrigen nicht mit der Stange 102 in Berührung kommt. Dies ist insbesondere in Figur 3d gut zu erkennen. Die Anschlagslasche 14 liegt auch bei normaler Belastung des Schnellbefestigungselements, z.B. durch einen, auf einer über den Befestigungsabschnitt 5 daran befestigten Führungsschiene aufliegenden, befüllten Gargutträger, nicht auf dem abgewinkelten Endbereich der Stange 102 auf. Die Anschlagslasche 15 ist gleich ausgestaltet wie die Anschlagslasche 14, tritt jedoch in der in Figur 3b gezeigten Position des Schnellbefestigungselements 1 nicht mit einem abgewinkelten Endbereich einer horizontalen Stange in Eingriff. Sie liegt jedoch mit einer Kante an dem mittleren Bereich der Stange 102 an, wodurch sie zum formschlüssigen Ineingrifftreten des Halteabschnitts 2 mit der Stange 102 beiträgt.

Das in den Figuren 3a, 3b, 3c und 3d gezeigte Schnellbefestigungselement 1 weist Laschen 10, 11 an gegenüberliegenden Seitenkanten des Verbindungsabschnittes 4 auf. Aus Figur 3b ist deutlich erkennbar, dass die Lasche 10 an dem vertikalen Stab 104 anliegt und damit die Befestigung des Schnellbefestigungselements an dem gitterartigen Seitenteil zusätzlich stützt und ein unbeabsichtigtes Biegen des Verbindungsabschnittes 4 bei großer Belastung der Führungsschiene z.B. durch einen befüllten Gargutträger verhindert. Die Lasche 11 tritt in dem in Figur 3b gezeigten an einem Seitengitter angebrachten Zustand nicht mit einem vertikalen Stab in Eingriff, dies würde jedoch analog zu der Anschlagslasche 15 an dem vertikalen Stab 105 dann erfolgen, wenn sich das Schnellbefestigungselement im Bereich der in Figur 3b nicht gezeigten und in Figur 3c hinter dem Schnellbefestigungselements erkennbaren weiteren Endbereiche der Stangen 102 und 103 befände und dort an dem gitterartigen Seitenteil 101 angebracht wäre. In den Figuren 3b, 3c und 3d ist auch erkennbar, dass das Schnellbefestigungselement 1 zwischen den horizontalen Stangen 102 und 103 befestigt ist, wobei die Stange 102 die obere Stange eines Stangenpaares 102 und 102' eines gitterartigen Seitenteils und die Stange 103 die untere Stange eines Stangenpaares 103 und 103' des gitterartigen Seitenteils ist.

Insbesondere in der in Figur 3c gezeigten Ansicht ist deutlich gezeigt, dass der untere Halteabschnitt 2 unter Ausbildung einer Betätigungslasche 8 verlängert ist. Die Lasche 15 liegt mit einer Kante an dem mittleren Bereich der unteren Stange 102 an und führt zu einem formschlüssigen Ineingrifftreten des Halteabschnitts 2 mit dieser Stange. Weiter weist der obere Halteabschnitt 3 eine Rastnase 7 auf.

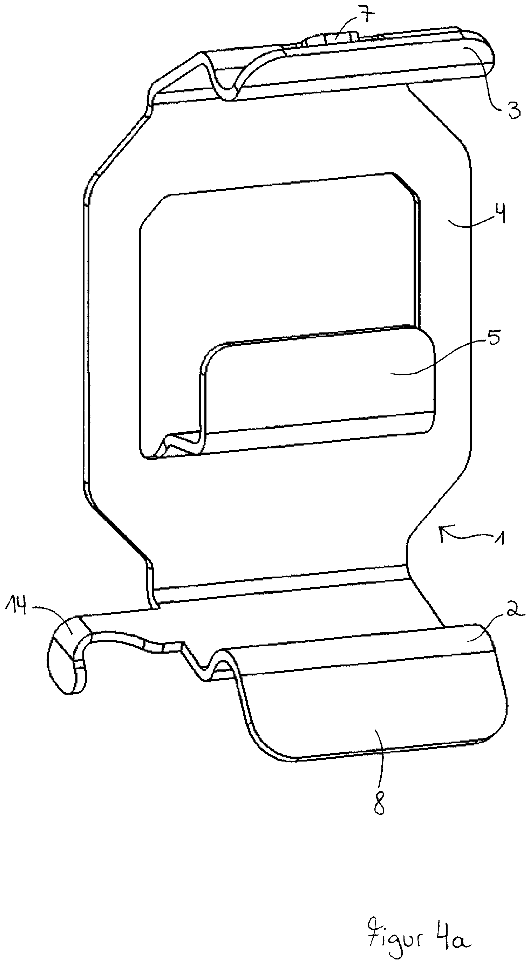

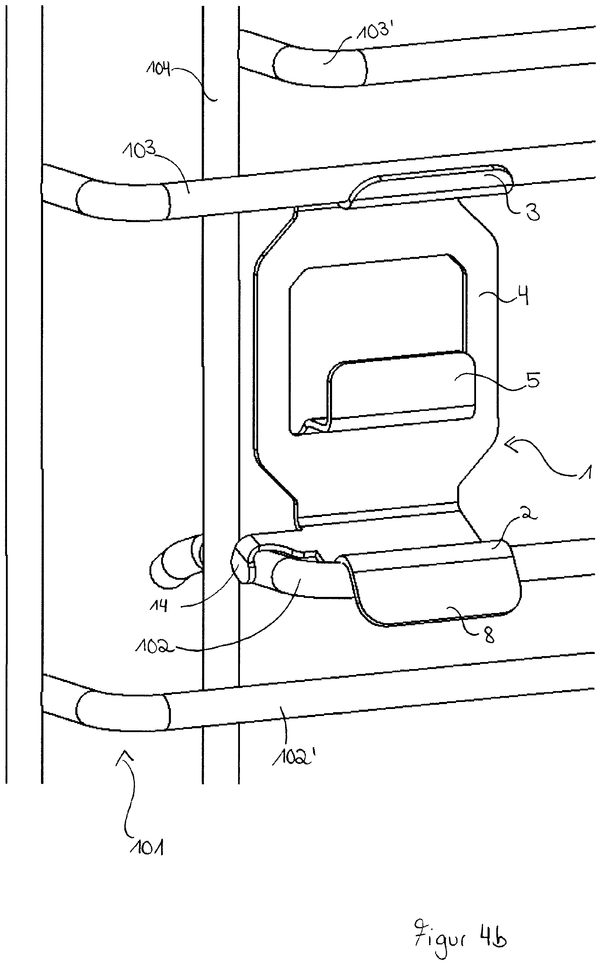

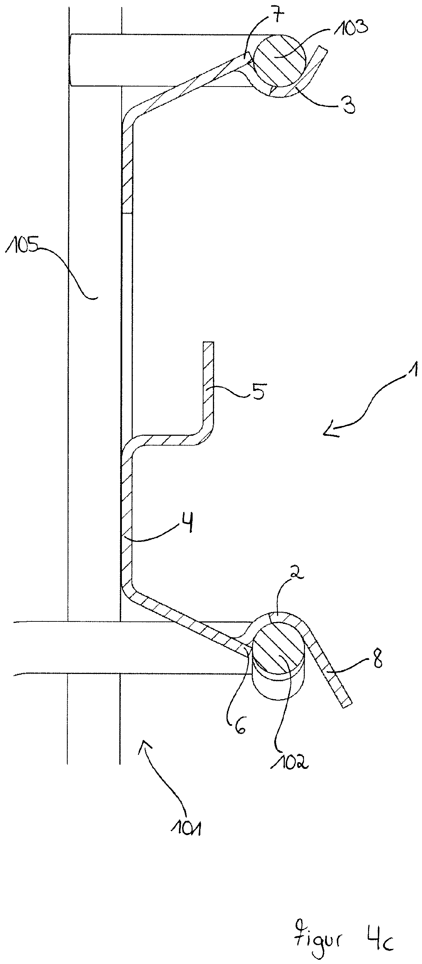

Das in den Figuren 4a, 4b und 4c gezeigte Schnellbefestigungselement 1 weist einen ersten Halteabschnitt 2 und einen zweiten Halteabschnitt 3 zum Ineingriffbringen mit den parallel verlaufenden und benachbart liegenden horizontalen Stangen 102 und 103 auf. Der die Halteabschnitte verbindende und zwischen diesen liegende Verbindungsabschnitt 4 weist einen Befestigungsabschnitt 5 auf.

Zusätzlich weist der untere Halteabschnitt 2 an einer Seite eine Anschlagslasche 14 auf, die sich in dem in Figur 4b gezeigten, an einem gitterartigen Seitenteil angebrachten Zustand oberhalb und abschnittsweise um einen abgewinkelten Endbereich der Stange 102 erstreckt, wobei die Anschlagslasche 14 an dem abgewinkelten Endbereich an einer von dem Schnellbefestigungselement abgewandten Seite anliegt.

Figur 4b zeigt, dass das Schnellbefestigungselement 1 zwischen den horizontalen Stangen 102 und 103 befestigt ist, wobei die Stange 102 die obere Stange eines Stangenpaares mit den Stangen102 und 102' eines gitterartigen Seitenteils 101 und die Stange 103 die untere Stange eines Stangenpaares mit den Stangen 103 und 103' des gitterartigen Seitenteils ist.

Figur 4c zeigt diese Ausführungsform in in an einem Seitengitter befestigten Zustand im Querschnitt, dessen Schnittebene im Wesentlichen der für Figur 1c beschriebenen entspricht. Die Stangen 102 und 103, an denen das Schnellbefestigungselement angebracht ist, sind an ihrem in Figur 4b nicht gezeigten Endbereich mit dem vertikalen Stab 105 verbunden. In dieser Ansicht ist deutlich erkennbar, dass sowohl der erste Halteabschnitt 2 über eine Rastnase 6 als auch der zweite Halteabschnitt 3 über eine Rastnase 7 verfügt. Zudem ist der erste Halteabschnitt 2 unter Ausbildung einer Betätigungslasche 8 verlängert. Die Anschlagslasche 14 ist in dieser Darstellung nicht zu sehen, da sie sich in dem durch die Querschnittsdarstellung abgeschnittenen Bereich des Schnellbefestigungselementes befindet.

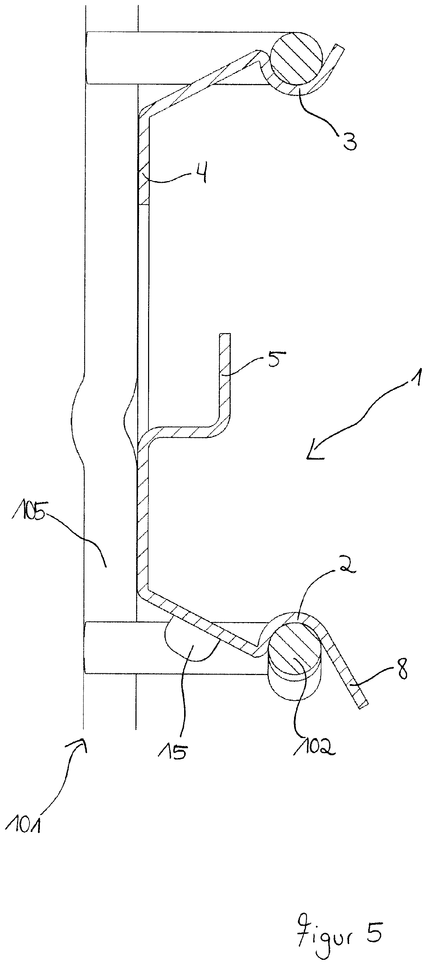

Figur 5 zeigt eine Abwandlung der in den Figuren 2a, 2b und 2c dargestellten Ausführungsform in der auch in Figur 2c gewählten Querschnittsansicht. Bei den Halteelementen 2 und 3 sind, anders als in den Figuren 2a, 2b und 2c gezeigt, keine Rastnasen vorhanden. Die Halteabschnitte 2 und 3 sind jedoch entlang eines Kreisbogens an die Kontur der jeweiligen Stange angepasst, wobei die Kreisbögen in Figur 5 jeweils einen größeren Mittelpunktswinkel aufweisen als bei den in den Figuren 2a, 2b und 2c gezeigten Halteelementen 2 und 3.

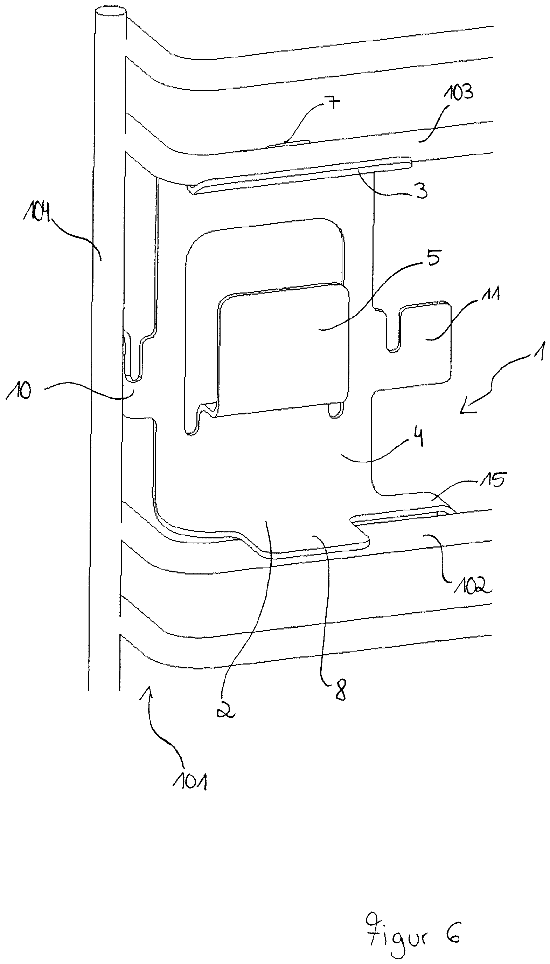

Figur 6 zeigt eine Abwandlung der in den Figuren 3a bis 3d gezeigten Ausführungsform in einer perspektivischen Ansicht, die der in Figur 3b entspricht. Anders als bei dieser oben beschriebenen Ausführungsform verläuft jedoch bei der in Figur 6 gezeigten Ausführungsform die Lasche 10 zu der Ebene des plattenförmigen Verbindungsabschnitts 4 abgewinkelt. Diese Lasche liegt dadurch in an einem gitterartigen Seitenteil 101 angebrachten Zustand an einer dem Schnellbefestigungselements zugewandten Seite des vertikalen Stabs 104 an. Weiter weicht diese Ausführungsform von der oben zu den Figuren 3a bis 3d beschriebenen Ausführungsform dadurch ab, dass die Lasche 14 nicht vorhanden ist. Die Lasche 15 weist nicht die oben beschriebene Biegung auf, so dass sie, wenn dieses Schnellbefestigungselement im Bereich des nicht dargestellten Endbereichs der Stange 102 angebracht ist, auf dem dort befindlichen abgewinkelten Endbereich aufliegen kann.

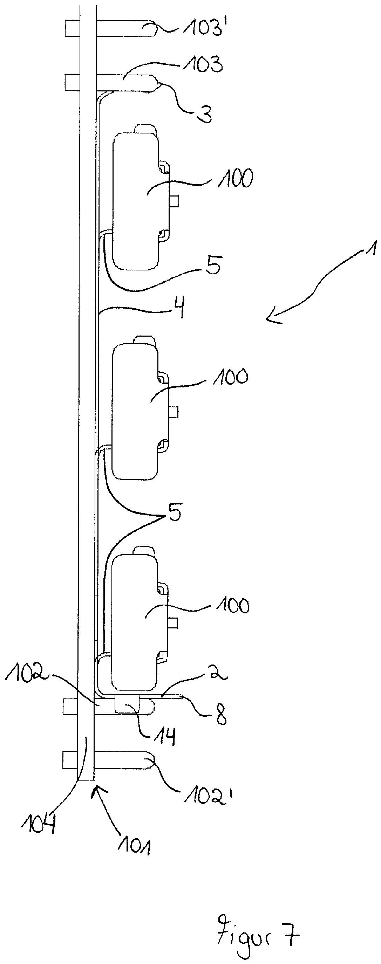

Figur 7 zeigt eine seitliche Draufsicht auf ein an einem gitterartigen Seitenteil 101 angebrachtes Schnellbefestigungselement 1, das eine Anschlagslasche 14 aufweist. Der erste Halteabschnitt 2 und der zweite Halteabschnitt 3 treten mit den Stangen 102 bzw. 103 des gitterartigen Seitenteils 101 in Eingriff. Abweichend von den in den oben beschriebenen Figuren gezeigten Ausführungsformen weist diese Ausführungsform jedoch insgesamt drei Befestigungsabschnitte 5 an dem Verbindungsabschnitt 4 auf. In der in Figur 7 gezeigten Ausführungsform ist an jedem dieser Befestigungsabschnitte 5 jeweils eine Führungsschiene 100 angebracht. Das Schnellbefestigungselement 1 ist zwischen den horizontalen Stangen 102 und 103 befestigt, wobei die Stange 102 die obere Stange eines Stangenpaares mit den Stangen 102 und 102' eines gitterartigen Seitenteils 101 und die Stange 103 die untere Stange eines Stangenpaares von Stangen 103 und 103' des gitterartigen Seitenteils ist.

Die in den Figuren 1 bis 7 zeigen jeweils Schnellbefestigungselemente, bei denen ein Befestigungsabschnitt 5 durch Ausstanzen und Ausprägen aus einer Ebene des Verbindungsabschnitts durch eine Kröpfung hervorsteht. Solche Schnellbefestigungselemente sind insbesondere für das Anbringen von Teleskop-Teilauszügen geeignet. Denkbar sind insbesondere für das Befestigen von Teleskop-Vollauszügen auch Schnellbefestigungselemente, bei denen der Befestigungsabschnitt dem Verbindungsabschnitt entspricht bzw. lediglich aus diesem ausgestanzt aber nicht ausgeprägt ist, so dass er nicht aus der Ebene des Verbindungsabschnitts hervorsteht.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen, mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

Die Erfindung soll nicht auf die in den Zeichnungen offenbarten Ausführungsformen, deren Darstellung und Beschreibung lediglich beispielhaft erfolgt, beschränkt sein.

### Bezugszeichenliste

- 1: Schnellbefestigungselement
- 2: erster Halteabschnitt
- 3: zweiter Halteabschnitt
- 4: Verbindungsabschnitt
- 5: Befestigungsabschnitt
- 6,7: Rastnase
- 8, 9: Betätigungslasche
- 10,11: Lasche
- 12, 13, 14, 15: Anschlagslasche
- 100: Führungsschiene
- 101: gitterartiges Seitenteil
- 102: erste horizontale Stange
- 103: zweite horizontale Stange
- 102', 103': weitere horizontale Stange eines gitterartigen Seitenteils
- 104, 105: vertikaler Stab

## Patentansprüche

1. Verwendung eines Schnellbefestigungselements (1) zur Befestigung einer oder mehrerer Führungsschienen (100) an zwei benachbarten, im Wesentlichen vertikal übereinander und parallel angeordneten, horizontal verlaufenden und in ihrem Endbereich winklig abgebogenen Stangen eines gitterartigen Seitenteils (101), wobei das gitterartige Seitenteil (101) übereinander angeordnete horizontale Stangenpaare (102, 102' und 103, 103') aufweist, wobei der Abstand in vertikaler Richtung zwischen den horizontalen Stangen eines Stangenpaares geringer ist als der Abstand zwischen horizontalen Stangen benachbarter Stangenpaare und wobei das Schnellbefestigungselement (1) zwischen den horizontalen Stangen (102, 103) benachbarter Stangenpaare angebracht wird, wobei das Schnellbefestigungselement
einen ersten Halteabschnitt (2) aufweist, welcher für ein form- und/oder kraftschlüssiges Ineingriffbringen des Schnellbefestigungselementes mit einer ersten Stange (102) der zwei benachbarten Stangen ausgebildet ist,
einen zweiten Halteabschnitt (3), welcher für ein form- und/oder kraftschlüssiges Ineingriffbringen des Schnellbefestigungselementes mit einer zweiten Stange (103) der zwei benachbarten Stangen ausgebildet ist, und
einen zwischen dem ersten Halteabschnitt (2) und dem zweiten Halteabschnitt (3) angeordneten und die Halteabschnitte (2, 3) verbindenden Verbindungsabschnitt (4) aufweist,
wobei sich die ersten und zweiten Halteabschnitte (2, 3) von dem Verbindungsabschnitt (4) zu einer Seite abgewinkelt zwischen den Stangen (102, 103) des Stangepaares befestigbar erstrecken und in befestigtem Zustand an einander zugewandten Seiten der Stangen (102, 103) anliegen, wobei die erste Stange (102) die obere Stange eines Stangenpaares (102, 102') des gitterartigen Seitenteils (101) ist und die zweite Stange (103) die untere Stange des benachbarten Stangenpaares (103, 103') des gitterartigen Seitenteils (101) ist, und
wobei der Verbindungsabschnitt (4) einen Befestigungsabschnitt (5) zum Befestigen der Führungsschiene (100) aufweist.

2. Verwendung gemäß Anspruch 1, **dadurch gekennzeichnet, dass** das Schnellbefestigungselement (1) für eine unter Aufbringung einer Kraft federnd vorgespannte Verringerung des Abstandes zwischen dem ersten und dem zweiten Halteabschnitt (2, 3) elastisch ausgebildet ist.

3. Verwendung gemäß einem der vorangehenden Ansprüche, **dadurch gekennzeichnet, dass** der Verbindungsabschnitt (4) im Wesentlichen plattenförmig ausgebildet ist und der Befestigungsabschnitt (5) zum Befestigen der Führungsschiene (100) als ein gekröpft aus der Ebene der Platte hervorstehender, laschenförmiger Abschnitt ausgebildet ist.

4. Verwendung gemäß einem der vorangehenden Ansprüche, **dadurch gekennzeichnet, dass** der erste (2) und/oder zweite (3) Halteabschnitt wenigstens in Bereichen, die für das Ineingriffbringen mit den Stangen vorgesehen sind, der Kontur der horizontalen Stange (102, 103) angepasst ist.

5. Verwendung gemäß einem der vorangehenden Ansprüche, **dadurch gekennzeichnet, dass** der erste (2) und/oder zweite (3) Halteabschnitt wenigstens eine Rastnase (6, 7) aufweist, die mit der jeweiligen ersten (102) und/oder zweiten (103) Stange in Eingriff bringbar ist.

6. Verwendung gemäß einem der vorangehenden Ansprüche, **dadurch gekennzeichnet, dass** der erste (2) und/oder der zweite (3) Halteabschnitt eine Betätigungslasche (9) aufweist, die sich an den Halteabschnitt an seiner von dem Verbindungsabschnitt (4) abgewandten Seite anschließt, vorzugsweise ist die Betätigungslasche (8, 9) eine Verlängerung des Halteabschnitts.

7. Verwendung gemäß einem der vorangehenden Ansprüche, **dadurch gekennzeichnet, dass** der Verbindungsabschnitt (4) wenigstens abschnittsweise im Wesentlichen plattenförmig ausgebildet ist, wobei an einer oder an beiden einander gegenüberliegenden Seitenkanten des Verbindungsabschnitts (4) Laschen (10, 11) ausgebildet sind, die sich im Wesentlichen in oder parallel zur Ebene des plattenförmigen Verbindungsabschnitts oder abgewinkelt zu dieser Ebene verlaufend erstrecken.

8. Verwendung gemäß einem der vorangehenden Ansprüche, **dadurch gekennzeichnet, dass** wenigstens einer der Halteabschnitte (2, 3) an einer oder beiden einander gegenüberliegenden Seiten wenigstens eine abgewinkelt ausgebildete Anschlagslasche (12, 13, 14, 15) aufweist.

9. Verwendung gemäß einem der vorangehenden Ansprüche, **dadurch gekennzeichnet, dass** das Schnellbefestigungselement (1) an dem Verbindungsabschnitt (4) einen, zwei, drei oder vier Befestigungsabschnitte (5) zum Anbringen einer entsprechenden Anzahl von Führungsschienen (100) aufweist.

10. Verwendung gemäß einem der vorangehenden Ansprüche, bei dem die Halteabschnitte (2, 3) und der Verbindungsabschnitt (4), vorzugsweise alle Elemente des Schnellbefestigungselements, einstückig ausgebildet sind, vorzugsweise aus Stahl- oder Edelstahlblech.

11. Verwendung gemäß einem der vorangehenden Ansprüche, **dadurch gekennzeichnet, dass** an der Führungsschiene wenigstens ein Schnellbefestigungselement (1) angebracht ist.

12. Verwendung gemäß einem der Ansprüche 1 bis 10 zur Befestigung einer oder mehrerer Führungsschienen an einem Seitengitter eines Backofens.

## Claims

1. Use of a quick-fastening element (1) for fastening one or more guide rails (100) to two adjacent horizontally extending bars of a grid-like side portion (101), that are arranged in substantially vertically superposed and parallel relationship and which are bent at an angle in their end region, wherein the grid-like side portion (101) has mutually superposed horizontal pairs of bars (102, 102' and 103, 103'), wherein the spacing in the vertical direction between the horizontal bars of a pair of bars is less than the spacing between horizontal bars of adjacent pairs of bars and wherein the quick-fastening element (1) is fitted between the horizontal bars (102, 103) of adjacent pairs of bars, wherein the quick-fastening element has
a first holding portion (2) which is adapted for positively locking and/or force-locking engagement of the quick-fastening element with a first bar (102) of the two adjacent bars, a second holding portion (3) which is adapted for positively locking and/or force-locking engagement of the quick-fastening element with a second bar (103) of the two adjacent bars, and
a connecting portion (4) arranged between the first holding portion (2) and the second holding portion (3) and connecting the holding portions (2, 3),
wherein the first and second holding portions (2, 3) extend from the connecting portion (4) to one side in angled relationship fastenably between the bars (102, 103) of the pair of bars and in the fastened condition bear against mutually facing sides of the bars (102, 103), wherein the first bar (102) is the upper bar of a pair of bars (102, 102') of the grid-like side portion (101) and the second bar (103) is the lower bar of the adjacent pair of bars (103, 103') of the grid-like side portion (101), and
wherein the connecting portion (4) has a fastening portion (5) for fastening the guide rail (100).

2. Use as set forth in claim 1 **characterised in that** the quick-fastening element (1) is elastically adapted for a reduction in the spacing between the first and second holding portions (2, 3), said reduction being resiliently prestressed with the application of a force.

3. Use as set forth in one of the preceding claims **characterised in that** the connecting portion (4) is substantially plate-shaped and the fastening portion (5) for fastening the guide rail (100) is in the form of a tab-shaped portion projecting from the plane of the plate in a cranked configuration.

4. Use as set forth in one of the preceding claims **characterised in that** the first (2) and/or second (3) holding portion is adapted to the contour of the horizontal bars (?) (102, 103) at least in regions which are intended for engagement with the bars.

5. Use as set forth in one of the preceding claims **characterised in that** the first (2) and/or second (3) holding portion has at least one latching nose (6, 7) which can be brought into engagement with the respective first (102) and/or second (103) bar.

6. Use as set forth in one of the preceding claims **characterised in that** the first (2) and/or the second (3) holding portion has an actuating tab (9) which adjoins the holding portion at its side remote from the connecting portion (4), preferably the actuating tab (8, 9) being a prolongation of the holding portion.

7. Use as set forth in one of the preceding claims **characterised in that** the connecting portion (4) is at least portion-wise of a substantially plate-shaped configuration, wherein provided at one or both mutually opposite side edges of the connecting portion (4) are tabs (10, 11) which extend substantially in or parallel to the plane of the plate-shaped connecting portion or in an angled relationship with said plane.

8. Use as set forth in one of the preceding claims **characterised in that** at least one of the holding portions (2, 3) has at least one abutment tab (12, 13, 14, 15) of an angled configuration at one or both mutually opposite sides.

9. Use as set forth in one of the preceding claims **characterised in that** on the connecting portion (4) the quick-fastening element (1) has one, two, three or four fastening portions (5) for mounting a corresponding number of guide rails (100).

10. Use as set forth in one of the preceding claims wherein the holding portions (2, 3) and the connecting portion (4), preferably all elements of the quick-fastening element, are in one piece, preferably consisting of steel sheet or stainless steel sheet.

11. Use as set forth in one of the preceding claims **characterised in that** mounted to the guide rail is at least one quick-fastening element (1).

12. Use as set forth in one of claims 1 through 10 for fastening one or more guide rails to a side grid of an oven.

## Revendications

1. Utilisation d'un élément de fixation rapide (1) pour la fixation d'un ou de plusieurs rails de guidage (100) sur deux barres adjacentes d'une partie latérale en forme de grille (101), disposées sensiblement verticalement et parallèlement l'une au-dessus de l'autre, s'étendant horizontalement et cintrées angulairement dans leur région d'extrémité, où la partie latérale en forme de grille (101) présente des paires de barres (102, 102' et 103, 103') horizontales disposées les unes au-dessus des autres, la distance en direction verticale entre les barres horizontales d'une paire de barres étant plus faible que la distance entre les barres horizontales de paires de barres adjacentes et l'élément de fixation rapide (1) étant disposé entre les barres horizontales (102, 103) de paires de barres adjacentes, l'élément de fixation rapide comportant
une première partie de retenue (2) qui est conçue pour une mise en prise par complémentarité de forme et/ou de force de l'élément de fixation rapide avec une première barre (102) des deux barres adjacentes,
une seconde partie de retenue (3) qui est conçue pour une mise en prise par complémentarité de forme et/ou de force de l'élément de fixation rapide avec une seconde barre (103) des deux barres adjacentes, et
une partie de liaison (4) disposée entre la première partie de retenue (2) et la seconde partie de retenue (3) et reliant les parties de retenue (2, 3),
les première et seconde parties de retenue (2, 3) s'étendant de la partie de liaison (4) vers un côté, en étant coudées de façon à pouvoir être fixées entre les barres (102, 103) de la paire de barres, et venant en appui, à l'état fixé, contre les côtés des barres (102, 103) orientés l'un vers l'autre, la première barre (102) étant la barre supérieure d'une paire de barres (102, 102') de la partie latérale (101) en forme de grille et la seconde barre (103) étant la barre inférieure de la paire de barres (103, 103') adjacente de la partie latérale (101) en forme de grille, et
la partie de liaison (4) comportant une partie de fixation (5) destinée à la fixation du rail de guidage (100).

2. Utilisation selon la revendication 1, **caractérisée en ce que** l'élément de fixation rapide (1) est conçu de manière élastique pour réduire, par précontrainte élastique en appliquant une force, la distance entre la première et la seconde parties de retenue (2, 3).

3. Utilisation selon l'une des revendications précédentes, **caractérisée en ce que** la partie de liaison (4) est réalisée sensiblement en forme de plaque et la partie de fixation (5) destinée à la fixation du rail de guidage (100) est réalisée en tant que partie en forme de languette faisant saillie de manière coudée depuis le plan de la plaque.

4. Utilisation selon l'une des revendications précédentes, **caractérisée en ce que** la première (2) et/ou la seconde (3) partie(s) de retenue est(sont) adaptée(s), au moins dans des régions prévues pour venir en prise avec les barres, au contour de la barre horizontale (102, 103).

5. Utilisation selon l'une des revendications précédentes, **caractérisée en ce que** la première (2) et/ou la seconde (3) partie(s) de retenue présente(nt) au moins un bec d'encliquetage (6, 7) qui peut être mis en prise respectivement avec la première barre (102) et/ou la seconde barre (103).

6. Utilisation selon l'une des revendications précédentes, **caractérisée en ce que** la première (2) et/ou la seconde (3) partie(s) de retenue présente(nt) une patte d'actionnement (9) qui se raccorde à la partie de retenue sur sa face opposée à la partie de liaison (4), la patte d'actionnement (8, 9) étant de préférence une prolongation de la partie de retenue.

7. Utilisation selon l'une des revendications précédentes, **caractérisée en ce que** la partie de liaison (4) est réalisée, au moins en partie, sensiblement en forme de plaque, des languettes (10, 11) étant réalisées sur l'un ou sur les deux bords latéraux mutuellement opposés de la partie de liaison (4) et s'étendant sensiblement dans le plan ou parallèlement au plan de la partie de liaison en forme de plaque, ou de manière coudée par rapport à ce plan.

8. Utilisation selon l'une des revendications précédentes, **caractérisée en ce qu'**au moins l'une des parties de retenue (2, 3) présente, sur l'une ou sur les deux faces opposées, au moins une languette de butée (12, 13, 14, 15) réalisée de manière coudée.

9. Utilisation selon l'une des revendications précédentes, **caractérisée en ce que** l'élément de fixation rapide (1) présente, sur la partie de liaison (4), une, deux, trois ou quatre partie(s) de fixation (5) destinée(s) à la pose d'un nombre correspondant de rails de guidage (100).

10. Utilisation selon l'une des revendications précédentes, dans laquelle les parties de retenue (2, 3) et la partie de liaison (4), de préférence tous les éléments de l'élément de fixation rapide, sont réalisés d'une seule pièce, de préférence en tôle d'acier ou d'acier spécial.

11. Utilisation selon l'une des revendications précédentes, **caractérisée en ce qu'**est disposé sur les rails de guidage au moins un élément de fixation rapide (1).

12. Utilisation selon l'une des revendications 1 à 10 pour la fixation d'un ou de plusieurs rails de guidage sur une grille latérale d'un four de cuisson.
